# EUROPÄISCHE PATENTSCHRIFT

(11) **EP 3 485 173 B1**
(45) Veröffentlichungstag und Bekanntmachung des Hinweises auf die Patenterteilung: **03.06.2020**
(21) Anmeldenummer: 17735446.1
(22) Anmeldetag: 27.06.2017
(51) Int. Cl.: F16B 13/06

(54) **SPREIZDÜBEL MIT ZINKLEGIERUNGS-BESCHICHTUNG**
EXPANSION DOWEL WITH ZINC ALLOY COATING
PITON A EXPANSION REVETU D'UN ALLIAGE DE ZINC

(30) Priorität: 15.07.2016 EP 16179695
(43) Veröffentlichungstag der Anmeldung: 22.05.2019
(73) Patentinhaber: Hilti Aktiengesellschaft, 9494 Schaan (LI)
(72) Erfinder: MEINDORFER, Tanja, 9470 Buchs (CH); KONDRATIUK, Jens, 9470 Buchs (CH); GUEVARA ARRIOLA, Arturo, 9470 Buchs (CH)
(74) Vertreter: Hilti Aktiengesellschaft Corporate Intellectual Property
(86) Internationale Anmeldenummer: PCT/EP2017/065863
(87) Internationale Veröffentlichungsnummer: WO 2018/010952

(56) Entgegenhaltungen:
- DE-A1- 4 225 869

## Beschreibung

Die Erfindung betrifft einen Spreizdübel gemäss dem Oberbegriff des Anspruchs 1. Ein solcher Spreizdübel ist ausgebildet mit zumindest einem Dübelkörper, der vorzugsweise als Spreizhülse ausgebildet ist, und einem Bolzen, wobei der Bolzen einen Expansionskörper, vorzugsweise einen Spreizkonus, aufweist, welcher den Dübelkörper radial nach aussen drängt, wenn der Expansionskörper in einer Auszugsrichtung relativ zum Dübelkörper versetzt wird, wobei am Expansionskörper, insbesondere in einem Kontaktbereich für den Dübelkörper, eine Korrosionsschutzschicht und eine die Korrosionsschutzschicht überdeckende Gleitschicht vorgesehen ist. Die Erfindung betrifft ferner ein Verfahren zum Herstellen eines solchen Spreizdübels gemäss Anspruch 8.

Spreizdübel sind beispielsweise aus der EP 0514342 A1 bekannt. Sie werden in ein Bohrloch in einem Substrat eines Bauteils, z. B. einer Wand oder einer Decke, eingesetzt. Durch Einziehen eines am Bolzen vorgesehenen Spreizkonus in einen als Spreizhülse ausgebildeten Dübelkörper wird der Dübelkörper radial aufgeweitet und nach aussen gedrängt und dadurch der Spreizdübel im Substrat verankert. Gemäss EP 0514342 A1 ist am Kontaktbereich zwischen Spreizkonus und Dübelkörper eine reibungsmindernde Beschichtung vorgesehen.

Die EP 0429880 A2 betrifft ein Verfahren zur korrosionsschützenden Beschichtung von Dübeln, insbesondere von Einschlagdübeln für den Fassadenbau, unter Aufbringung einer zinkhaltigen Schutzschicht, mit folgenden Schritte: mechanisches Reinigen der Dübeloberfläche und/oder Aufbringen einer Grundierung auf die Dübeloberfläche und Trocknen, mechanisches Aufbringen wenigstens einer Schicht eines zinkhaltigen organischen Beschichtungsmaterials, Trocknen einer jeden aufgebrachten zinkhaltigen Schicht, Aufbringen einer organischen Schutzschicht, und Trocknen der organischen Schutzschicht.

Die Europäische Patentanmeldung mit dem Anmeldeaktenzeichen 15171632.1 betrifft einen Spreizanker, bei dem im Spreizbereich eine Doppelbeschichtung mit einer inneren Schicht und einer die innere Schicht überdeckenden äusseren Schicht vorgesehen ist, wobei die äussere Schicht zum benachbarten Element einen Reibungskoeffizienten aufweist, der grösser ist als ein Reibungskoeffizient der inneren Schicht zum benachbarten Element.

Die US 8491244 B2 beschreibt einen Spreizdübel, bei dem ein Spreizhülsenelement mit Zinn-Zink beschichtet ist.

Die EP 0523298 B1 zeigt eine Schraube aus austenitischem rostfreiem Stahl, deren Oberflächenschicht als nitrierte Schicht gebildet wird und dann durch einen Metallüberzug, beispielsweise eine Nickel-Zink-Beschichtung, überdeckt wird.

Die US 4746408 A beschreibt eine mehrlagige Beschichtung für Schrauben, insbesondere aufweisend eine Zink-Nickel-Schicht und eine organische Deckschicht.

Die DE202004001155 U1 offenbart eine Radschraube im Kraftfahrzeug-Bereich mit einer Aussenoberfläche, die gebildet ist durch eine galvanisch aufgebrachte Zink-Nickel-Legierungsschicht sowie eine zusätzliche silikatische Gleitbeschichtung.

DE 3924133 A1 zeigt einen Spreizdübel, bei dem die Spreizelemente feuerverzinkt sind.

Die US 2008050195 A beschreibt einen Spreizdübel, bei dem die Oberflächenrauigkeit der Spreizhülse zum hinteren Ende des Spreizdübels hin ansteigt.

Die DE 4225869 A1 beschreibt einen Dübel aus rostfreiem Stahl, bei dem die einer Flächenpressung unterliegenden Flächen mit einer einer Blockierung entgegenwirkenden Beschichtung versehen sind. Insbesondere kann eine Beschichtung durch Verzinken oder Nitrieren gebildet sein und fakultativ eine zusätzliche Schicht aus Gleitlack, Wachs oder Fett aufgebracht sein.

Die DE10118374 A1 beschreibt ein Verfahren zur Herstellung eines Spreizankers, der an seinem vorderen Ende einen mit einer Gleitbeschichtung versehenen Konus aufweist, wobei vor dem Aufbringen der Gleitbeschichtung die Oberfläche des Konus mit Stahlbürsten so bearbeitet wird, dass parallel verlaufende Rillen entstehen.

Die DE 19716926 A1 offenbart einen Spreizanker, der eine Beschichtung in Form eines Schrumpfschlauchs aufweist.

Aus der EP 2876312 A1 geht ein Spreizanker hervor, bei dem der Reibungskoeffizient der Reibung zwischen Expansionskörper und Dübelkörper richtungsabhängig ist.

Die EP 2339186 B1 zeigt eine Ankerschraube mit einem Keilglied, das aus einem Material mit einer Vickershärte von zwischen ungefähr 218 HV und ungefähr 290 HV gebildet ist, und mit einem Hülsenelement, das aus einem Material mit einer Vickershärte von zwischen ungefähr 218 HV und ungefähr 290 HV gebildet ist.

Die DE 102007057160 A1 schlägt vor, bei einem Spreizanker einen Gleitring in eine Ringstufe am Übergang vom Schaft zum Expansionskörper einzulegen, was ein Fressen der Spreizhülse auf dem Expansionskörper vermeiden soll.

Die DE 10248664 A1 zeigt einen Spreizanker aus Edelstahl, bei dem der Spreizabschnitt zumindest bereichsweise Krater aufweist.

Die DE 19522026 A1 offenbart einen Spreizanker mit einer Zwischenlage zwischen dem Expansionskörper und dem Dübelkörper, die aus einem Streifen glatter Folie gebildet wird und unverlierbar zwischen Expansionskörper und Dübelkörper festgelegt ist.

Aufgabe der Erfindung ist es, einen einfach zu fertigenden und zugleich besonders zuverlässigen, leistungsfähigen und vielseitig einsetzbaren Spreizdübel sowie ein Verfahren zu dessen Herstellung anzugeben.

Die Aufgabe wird erfindungsgemäss durch einen Spreizdübel mit den Merkmalen des Anspruchs 1 und ein entsprechendes Herstellungsverfahren mit den Merkmalen des Anspruchs 8 gelöst. Bevorzugte Ausführungsformen des Spreizdübels sind in den abhängigen Ansprüchen angegeben.

Ein erfindungsgemässer Spreizdübel ist dadurch gekennzeichnet, dass die Korrosionsschutzschicht eine Zn/Ni-Beschichtung oder eine Zn/Fe-Beschichtung ist.

Erfindungsgemäss wird als Korrosionsschutzschicht eine Zinklegierungsbeschichtung, insbesondere eine Zink-Nickel-Beschichtung (Zn/Ni-Beschichtung) oder eine Zink-Eisen-Beschichtung (Zn/Fe-Beschichtung) verwendet, wobei eine Zink-Nickel-Beschichtung, unter anderem aus Gründen der noch brauchbareren Härte, bevorzugt sein kann. Im Rahmen von Experimenten wurde in überraschender Weise beobachtet, dass derartige Korrosionsschutzschichten die Leistungsfähigkeit von Spreizdübeln deutlich steigern können, und zwar aufgrund gleich zweier vorteilhafter Effekte.

Zum einen wurde bei weichen Korrosionsschutzschichten bei höheren Flächenpressungen, wie sie bei belasteten Dübeln auftreten können, häufig eine Art Eindrücken der Korrosionsschutzschichten und damit einhergehend ein Verschleiss durch eine Art seitliches Verdrängen der darüber liegenden Gleitschichten beobachtet, was zu einem unerwünschten Reibungsverhalten führen konnte. Demgegenüber sind die erfindungsgemäss als Zn/Ni-Beschichtung beziehungsweise Zn/Fe-Beschichtung ausgeführten Korrosionsschutzschichten vergleichsweise hart. Insbesondere kann im Gegensatz zu galvanischen Beschichtungen aus reinem Zink, bei denen häufig eine Härte von weniger als 100 HV erreicht wird, mit den erfindungsgemässen Zn/Ni-Beschichtungen eine Härte beispielsweise im Bereich zwischen 350 HV und 500 HV, vorzugsweise von etwa 425 HV erhalten werden, also eine Härte, die insbesondere im Bereich der Härte von Stahl liegt, welcher typischerweise für den unter der Korrosionsschutzschicht liegenden Expansionskörper eingesetzt wird, oder die sogar grösser ist als die Härte dieses Stahls. Aufgrund der vergleichsweise hohen und im Bereich der Untergrundhärte oder darüber liegenden Härte einer Zn/Ni-Beschichtung beziehungsweise Zn/Fe-Beschichtung kann bei erfindungsgemäss ausgeführten Korrosionsschutzschichten dem zuvor beschriebenen unerwünschten Eindrücken und Aufplatzen in einfacher und wirksamer Weise entgegengewirkt werden, so dass in besonders einfacher Weise besonders zuverlässige und leistungsfähige Dübel erhalten werden können. Die erfindungsgemäss ausgeführten Korrosionsschutzschichten stellen also einen besonders harten und verschleissfesten Untergrund für die darüber liegenden Funktionsbeschichtungen dar.

Zum anderen wurde in überraschender Weise festgestellt, dass mit erfindungsgemässen Zn/Ni- beziehungsweise Zn/Fe-Korrosionsschutzschichten, im Vergleich zu galvanischen Zinkbeschichtungen, besonders niedrige Differenzen zwischen dem dynamischen Reibungskoeffizienten und dem statischen Reibungskoeffizienten der Reibung zwischen Expansionskörper und Dübelkörper erhalten werden konnten. Auch dies kann vorteilhaft für das Lastverhalten des Dübels sein. Denn wenn der statische Reibungskoeffizient nahe am dynamischen Reibungskoeffizienten liegt, ist nur ein geringer Widerstand gegen ein Verrutschen des Dübelkörpers auf dem Expansionskörper gegeben, so dass ein besonders gutes Nachspreizverhalten gegeben ist, das heisst der Dübel kann zuverlässig weiter spreizen wenn sich die Lastsituation und/oder die Bohrlochabmessungen ändern sollte, beispielsweise in gerissenem Beton. Auch aus diesem Grunde können erfindungsgemäss besonders zuverlässige und leistungsfähige Dübel erhalten werden, insbesondere für gerissenen Beton. Die erfindungsgemässen Korrosionsschutzschichten stellen somit auch bei hohen Flächenpressungen besonders gute Reibgrundlagen für definierte Reibungskoeffizienten dar.

Die Gleitschicht deckt die Korrosionsschutzschicht nach aussen hin ab, das heisst die Korrosionsschutzschicht ist zwischen der Gleitschicht und dem die Schichten tragenden Expansionskörper angeordnet. Die Korrosionsschutzschicht kann sich unmittelbar, d.h. ohne Zwischensicht, auf dem Expansionskörper befinden. Es können aber auch eine oder mehrere Zwischenschichten zwischen der Korrosionsschutzschicht und dem Expansionskörper vorgesehen sein. Die Gleitschicht kann sich unmittelbar, d.h. ohne Zwischensicht, auf der Korrosionsschutzschicht befinden. Es können aber auch eine oder mehrere Zwischenschichten zwischen der Gleitschicht und der Korrosionsschutzschicht vorgesehen sein. Insbesondere kann die Korrosionsschutzschicht auf ihrer der Gleitschicht zugewandten Seite eine Passivierungsschicht aufweisen, vorzugsweise eine Chrom(III)-Passivierungsschicht.

Der Nickelgehalt in der Zn/Ni-Beschichtung bzw. der Eisengehalt in der Zn/Fe-Beschichtung beträgt vorzugsweise 8 - 18 wt%, insbesondere 10 - 16 wt%. Ist der Gehalt zu hoch, kann die Beschichtung zu spröde werden, worunter die Hafteigenschaften leiden können. Ist der Gehalt zu klein, kann der Korrosionsschutz leiden.

Der Dübelkörper ist erfindungsgemäss längs des Bolzens verschiebbar am Bolzen angeordnet, insbesondere befestigt. Soweit von "radial" und "axial" die Rede ist, soll sich dies insbesondere auf die Längsachse des Bolzens und/oder des Spreizdübels beziehen, die insbesondere die Symmetrie- und/oder Mittelachse des Bolzens beziehungsweise des Spreizdübels sein kann. Der Spreizdübel kann insbesondere ein kraftkontrolliert spreizender Spreizdübel sein.

Erfindungsgemäss wird der Dübelkörper vom Expansionskörper radial nach aussen gedrängt und dabei gegen die Bohrlochwand im Substrat gepresst, wenn der Expansionskörper in Auszugsrichtung des Bolzens relativ zum Dübelkörper axial versetzt wird. Bei diesem Vorgang, der insbesondere durch eine am Expansionskörper vorgesehene Schrägfläche bewirkt wird und bei dem der Dübelkörper, der vorzugsweise als Spreizhülse ausgebildet ist, auch aufgeweitet werden kann, wird der Spreizdübel im Bohrloch verankert. Vorzugsweise verläuft die Auszugsrichtung parallel zur Längsachse des Bolzens und/oder zeigt aus dem Bohrloch heraus. Insbesondere nimmt am Expansionskörper der Abstand der Oberfläche des Expansionskörpers von der Längsachse des Bolzens entgegen der Auszugsrichtung zu.

Die erfindungsgemässe Korrosionsschutzschicht und die erfindungsgemässe Gleitschicht sind zumindest in einem Kontaktbereich zwischen dem Expansionskörper und dem Dübelkörper vorgesehen, also insbesondere in einem Bereich, in welchem der Dübelkörper so am Expansionskörper anliegt, dass der Expansionskörper gegen den Dübelkörper wirken und letzteren radial nach aussen drängen kann. Die erfindungsgemässen Schichten können auch über den Kontaktbereich hinausreichen und sich auch auf den gesamten Bolzen erstrecken, was unter anderem was herstellungstechnische Vorteile haben kann. Insbesondere können sich die erfindungsgemässen Schichten auch auf eine rückwärtige Lastaufnahmeeinrichtung, insbesondere ein rückwärtiges Aussengewinde, des Bolzens erstrecken.

Besonders bevorzugt ist es, dass die Korrosionsschutzschicht eine Härte zwischen 350 HV und 500 HV aufweist. In diesem Härtebereich sind die zuvor erläuterten positiven Effekte besonders wirksam, insbesondere wenn der Expansionskörper aus Stahl besteht.

Insbesondere kann vorgesehen sein, dass die Zn/Ni-Beschichtung eine aus einem alkalischen Elektrolyten abgeschiedene Zn/Ni-Beschichtung ist. Hierdurch können in besonders einfacher Weise besonders gleichmässige Schichtdicken erhalten werden, was wiederum für ein besonders homogenes Reibverhalten vorteilhaft sein kann.

Der Dübelkörper und/oder der Bolzen, insbesondere der Expansionskörper des Bolzens, bestehen bevorzugt aus einem Metallmaterial, insbesondere aus Stahl. Besonders bevorzugt ist es also, dass der Expansionskörper aus Stahl besteht, vorzugsweise aus C-Stahl.

Die Gleitschicht kann zweckmässigerweise ein wasserbasierter Gleitlack sein, insbesondere ein Alkydharzlack.

Besonders zweckmässig ist es, dass der Dübelkörper eine Spreizhülse ist, die den Bolzen zumindest bereichsweise umgibt, und/oder dass der Expansionskörper ein Spreizkonus ist. Hierdurch wird eine besonders gleichmässige Krafteinleitung in Umfangsrichtung erzielt. Vorzugsweise beträgt die Winkelausdehnung der Spreizhülse um die Längsachse des Bolzens zumindest 270°. Der Spreizkonus ist erfindungsgemäss zum Aufspreizen der Spreizhülse, das heisst zum radialen Aufweiten der Spreizhülse, vorgesehen. Es können ein Dübelkörper oder auch mehrere Dübelkörper vorgesehen sein, und eine entsprechende Anzahl von Expansionskörpern. Der Spreizkonus kann eine mathematisch streng konische Oberfläche haben, muss dies aber nicht.

Nach der Erfindung kann der Bolzen eine Lastaufnahmeeinrichtung aufweisen, die insbesondere als Aussengewinde, als Innengewinde oder als Kopf ausgebildet sein kann. Die Lastaufnahmeeinrichtung dient zur Einleitung von Zugkräften, die in Auszugsrichtung gerichtet sind, in den Spreizdübel. Zweckmässigerweise ist der Expansionskörper in einem ersten Endbereich des Bolzens und die Lastaufnahmeeinrichtung in einem entgegengesetzt liegenden zweiten Endbereich des Bolzens angeordnet. Insbesondere kann der Richtungsvektor der Auszugsrichtung vom Expansionskörper zur Lastaufnahmeeinrichtung gerichtet sein. Der Abstand der Oberfläche des Expansionskörpers zur Längsachse des Bolzens nimmt vorzugsweise mit zunehmendem Abstand von der Lastaufnahmeeinrichtung zu.

Der Spreizdübel ist vorzugsweise ein Spreizdübel des Bolzentyps. Bei einem solchen Spreizdübel wird der Expansionskörper beim Setzen des Dübels durch eine axiale Bewegung des Bolzens relativ zum Dübelkörper in den Dübelkörper eingezogen. Bei einem Spreizdübel des Bolzentyps ist der Bolzen vorzugsweise einstückig ausgebildet, insbesondere ist der Expansionskörper einstückig mit benachbarten Bolzenbereichen ausgeführt. Vorzugsweise kann am Bolzen ein Anschlag, beispielsweise eine Ringschulter, ausgebildet sein, der eine Verschiebung des Dübelkörpers vom Expansionskörper hinweg begrenzt.

Alternativ könnte der Spreizdübel ein Spreizdübel des Hülsentyps sein. Bei einem Spreizdübel des Hülsentyps weist der Bolzen eine vom Expansionskörper separate Ankerstange auf, wobei der Expansionskörper vorzugsweise über korrespondierende Gewinde mit der Ankerstange verbunden ist. Das Einziehen des Expansionskörpers in den Dübelkörper beim Setzen des Dübels kann dann vorzugsweise zumindest teilweise durch Rotation der Ankerstange relativ zum Expansionskörper bewirkt werden, welche von einem Spindeltrieb, der von den korrespondierenden Gewinden gebildet wird, in eine Axialbewegung des Expansionskörpers relativ zur Ankerstange umgesetzt wird. Insbesondere bei einem Spreizdübel des Hülsentyps kann der Dübelkörper, der auch mehrteilig ausgeführt sein kann, auch bis zum Bohrlochmund reichen.

Die Erfindung betrifft auch ein Verfahren zum Herstellen eines erfindungsgemässen Spreizdübels, bei dem die Korrosionsschutzschicht galvanisch abgeschieden wird, insbesondere aus einem alkalischen Bad. Im Anschluss an das galvanische Abscheiden der Korrosionsschutzschicht kann die Gleitschicht, beispielsweise in einem Tauchverfahren, insbesondere einem Tauchzentrifugierverfahren, aufgebracht werden. Nach dem galvanischen Abscheiden der Korrosionsschutzschicht und vor dem Aufbringen der Gleitschicht wird die Korrosionsschutzschicht vorzugsweise passiviert, insbesondere Cr(III)-passiviert.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine teilweise längsgeschnittene Ansicht eines in einem Betonsubstrat gesetzten erfindungsgemässen Spreizdübels gemäss einer ersten Ausführungsform;
- Figur 2:: eine Detailansicht des Spreizdübels aus Figur 1 an der in Figur 1 mit einem Kreis gekennzeichneten Stelle am Kontaktbereich zwischen Expansionskörper und Dübel körper;
- Figur 3:: eine Seitenansicht des Bolzens eines Spreizdübels bei einer Abwandlung der Ausführungsform der Figuren 1 und 2;
- Figur 4:: eine teilweise längsgeschnittene Ansicht eines in einem Betonsubstrat gesetzten erfindungsgemässen Spreizdübels gemäss einer weiteren Ausführungsform; und
- Figur 5:: eine Detailansicht des Spreizdübels aus Figur 4 an der in Figur 4 mit einem Kreis gekennzeichneten Stelle am Kontaktbereich zwischen Expansionskörper und Dübelkörper.

Gleich oder analog wirkende Elemente sind in den Figuren mit denselben Bezugszeichen gekennzeichnet.

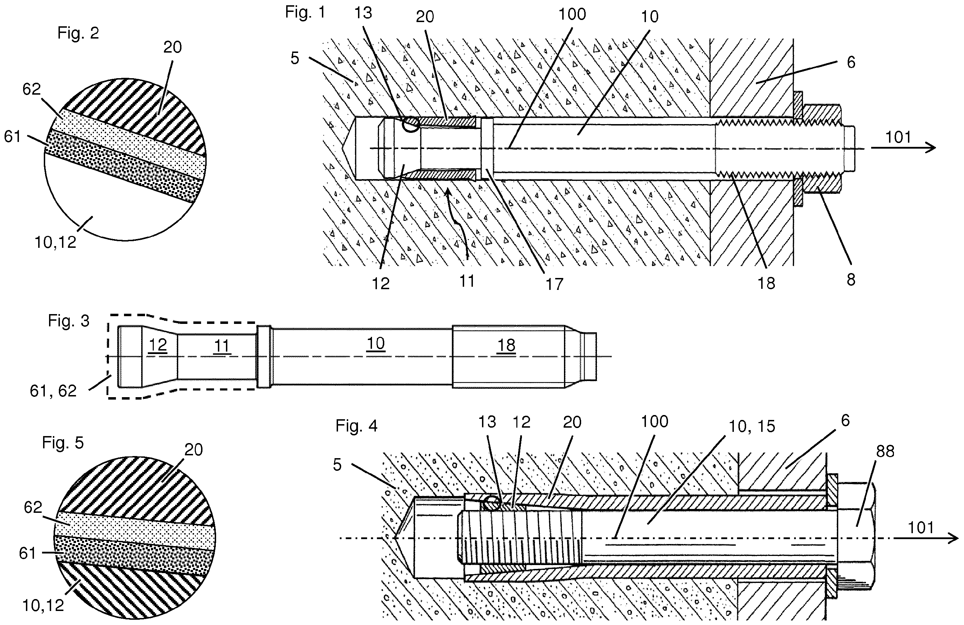

Die Figuren 1 und 2 zeigen ein erstes Ausführungsbeispiel eines Spreizdübels gemäss der Erfindung. Wie insbesondere Figur 1 zeigt, weist der Spreizdübel einen Bolzen 10 und einen als Spreizhülse ausgebildeten Dübelkörper 20 auf, welcher den Bolzen 10 umgibt. Der Bolzen 10 weist einen Halsbereich 11 mit konstantem Querschnitt und im Anschluss an den Halsbereich 11 im vorderen Endbereich des Bolzens 10 einen als Spreizkonus ausgebildeten Expansionskörper 12 für den Dübelkörper 20 auf, an welchem die Oberfläche als Schrägfläche 13 ausgebildet ist. Die Schrägfläche 13 ist hier rotationsymmetrisch ausgeführt. Aufgrund der Schrägfläche 13 weitet sich der Bolzen 10 am Expansionskörper 12 ausgehend vom Halsbereich 11 zu seinem vorderen Ende hin auf. Auf der dem Expansionskörper 12 abgewandten Seite des Halsbereichs 11 weist der Bolzen 10 einen beispielsweise als Ringschulter ausgebildeten Anschlag 17 für den als Spreizhülse ausgebildeten Dübelkörper 20 auf. An seinem dem Expansionskörper 12 entgegengesetzten hinteren Endbereich ist der Bolzen 10 mit einem Aussengewinde 18 für eine Mutter 8 versehen.

Beim Setzen des Spreizdübels wird der Bolzen 10 mit dem Expansionskörper 12 voran entgegen der Auszugsrichtung 101 parallel zur Längsachse 100 des Bolzens 10 in ein Bohrloch im Substrat 5 aus Figur 1 geschoben. Aufgrund des Anschlags 17 wird dabei auch der als Spreizhülse ausgebildete Dübelkörper 20 in das Bohrloch eingebracht. Sodann wird der Bolzen 10, beispielsweise durch Anziehen der Mutter 8, wieder ein Stück weit in der parallel zur Längsachse 100 verlaufenden Auszugsrichtung 101 aus dem Bohrloch herausgezogen. Aufgrund seiner Reibung mit der Bohrlochwand bleibt der als Spreizhülse ausgebildete Dübelkörper 20 dabei zurück und es kommt zu einer Verschiebung des Bolzens 10 relativ zum Dübelkörper 20. Bei dieser Verschiebung dringt der Expansionskörper 12 des Bolzens 10 immer tiefer so in den Dübelkörper 20 ein, dass der Dübelkörper 20 vom Expansionskörper 12 radial aufgeweitet und mit der Wand des Bohrlochs verpresst wird. Durch diesen Mechanismus wird der Spreizdübel im Substrat 5 fixiert. Der gesetzte Zustand des Spreizdübels, in welchem er im Substrat 5 fixiert ist, ist in Figur 1 gezeigt. Mittels der Mutter 8 kann ein Anbauteil 6 am Substrat 5 festgelegt werden.

Wie insbesondere in Figur 2 erkennbar ist, weist der Expansionskörper 12 in einem an seiner Schrägfläche 13 ausgebildeten Kontaktbereich mit dem Dübelkörper 20 eine Doppelbeschichtung bestehend aus einer innen angeordneten Korrosionsschutzschicht 61 und einer aussen angeordneten Gleitschicht 62 auf, wobei die Korrosionsschutzschicht 61 zwischen der Gleitschicht 62 und dem die beiden Schichten 61, 62 tragenden, insbesondere stoffschlüssig tragenden, Expansionskörper 12 angeordnet ist. Dabei ist die Korrosionsschutzschicht 61 eine Zn/Ni-Beschichtung oder eine Zn/Fe-Beschichtung und die Gleitschicht 62 beispielsweise ein wasserbasierter Gleitlack.

Beim Ausführungsbeispiel der Figuren 1 und 2 wurde die Doppelbeschichtung bestehend aus den Schichten 61 und 62 am Expansionskörper 12 beschrieben. Wie Figur 3 zeigt kann sich die - in Figur 3 mit Strichlinien schematisch stark vergrössert dargestellte - Doppelbeschichtung mit den Schichten 61 und 62 aber zusätzlich auch auf den Halsbereich 11 erstrecken, oder auch, nicht dargestellt, auf den gesamten Bolzen 10 erstrecken.

Bei den Ausführungsbeispielen der Figuren 1 bis 3 ist der Spreizdübel jeweils als sogenannter Spreizdübel des Bolzentyps ausgeführt. Ein weiteres Ausführungsbeispiel, bei dem der Spreizdübel als sogenannter Spreizdübel des Hülsentyps ausgebildet ist, ist in den Figuren 4 und 5 gezeigt. Im Gegensatz zu den Spreizdübeln aus den Figuren 1 bis 3, bei denen der Expansionskörper 12 axial fest am restlichen Bolzen 10 befestigt und insbesondere einstückig mit dem restlichen Bolzen 10 ausgebildet ist, weist der Bolzen 10 des Ausführungsbeispiels der Figuren 4 und 5 eine Ankerstange 15 auf, die vom Expansionskörper 12 getrennt ist, das heisst die Ankerstange 15 und der Expansionskörper 12 sind zwei separate Teile. Der Expansionskörper 12 mit der Schrägfläche 13 weist ein Innengewinde auf, welches mit einem Aussengewinde an der Ankerstange 15 des Bolzens 10 korrespondiert. Darüber hinaus reicht beim Spreizdübel der Figuren 4 und 5 der als Spreizhülse ausgebildete Dübelkörper 20, welcher auch mehrteilig sein kann, bis zum Bohrlochmund, und am rückwärtigen Endbereich des Bolzens 10 ist ein verbreiterter Kopf 88 mit einer Aussenmehrkantstruktur drehfest an der Ankerstange 15 angeordnet.

Zum Setzen des Spreizdübels der Figuren 4 und 5 wird die Ankerstange 15, vorzugsweise über den Kopf 88, um die Längsachse 100 in Drehung versetzt. Die korrespondierenden Gewinde wandeln diese Drehbewegung der Ankerstange 15 in eine Axialbewegung des Expansionskörpers 12 relativ zur Ankerstange 15 und damit relativ zum Dübelkörper 20 um, was zum Einziehen des Expansionskörpers 12 mit der Schrägfläche 13 in den Dübelkörper 20 führt.

Auch beim Spreizdübel der Figuren 4 und 5 weist der Expansionskörper 12 des Bolzens 10 in einem an der Schrägfläche 13 des Expansionskörpers 12 ausgebildeten Kontaktbereich mit dem Dübelkörper 20 eine Doppelbeschichtung bestehend aus einer innen angeordneten Korrosionsschutzschicht 61 und einer aussen angeordneten Gleitschicht 62 auf, wobei die Korrosionsschutzschicht 61 eine Zn/Ni-Beschichtung oder eine Zn/Fe-Beschichtung ist und die Gleitschicht 62 beispielsweise ein wasserbasierter Gleitlack.

## Patentansprüche

1. Spreizdübel mit
- zumindest einem Dübelkörper (20) und
- einem Bolzen (10), wobei der Bolzen (10) einen Expansionskörper (12) aufweist, welcher den Dübelkörper (20) radial nach aussen drängt, wenn der Expansionskörper (12) in einer Auszugsrichtung (101) relativ zum Dübelkörper (20) versetzt wird,
- wobei am Expansionskörper (12) eine Korrosionsschutzschicht (61) und eine die Korrosionsschutzschicht (61) überdeckende Gleitschicht (62) vorgesehen ist,
**dadurch gekennzeichnet,**
**dass** die Korrosionsschutzschicht (61) eine Zn/Ni-Beschichtung oder eine Zn/Fe-Beschichtung ist.

2. Spreizdübel nach Anspruch 1,
**dadurch gekennzeichnet,**
**dass** die Korrosionsschutzschicht (61) eine Härte zwischen 350 HV und 500 HV aufweist.

3. Spreizdübel nach einem der vorstehenden Ansprüche,
**dadurch gekennzeichnet,**
**dass** die Zn/Ni-Beschichtung eine aus einem alkalischen Elektrolyten abgeschiedene Zn/Ni-Beschichtung ist.

4. Spreizdübel nach einem der vorstehenden Ansprüche,
**dadurch gekennzeichnet,**
**dass** der Expansionskörper (12) aus Stahl besteht.

5. Spreizdübel nach einem der vorstehenden Ansprüche,
**dadurch gekennzeichnet,**
**dass** die Gleitschicht (62) ein wasserbasierter Gleitlack ist.

6. Spreizdübel nach einem der vorstehenden Ansprüche,
**dadurch gekennzeichnet,**
**dass** das Dübelkörper (20) eine Spreizhülse ist, die den Bolzen (10) zumindest bereichsweise umgibt, und
**dass** der Expansionskörper (12) ein Spreizkonus ist.

7. Spreizdübel nach einem der vorstehenden Ansprüche,
**dadurch gekennzeichnet,**
**dass** er ein Spreizdübel des Bolzentyps ist.

8. Verfahren zum Herstellen eines Spreizdübels nach einem der vorstehenden Ansprüche, bei dem die Korrosionsschutzschicht (61) galvanisch abgeschieden wird.

## Claims

1. Expansion dowel comprising
- at least one dowel body (20) and
- a bolt (10), the bolt (10) having an expanding body (12) which pushes the dowel body (20) radially outward when the expanding body (12) is displaced in a pullout direction (101) relative to the dowel body (20),
- a corrosion protection layer (61) and an anti-friction layer (62) covering the corrosion protection layer (61) being provided on the expanding body (12), **characterized in that** the corrosion protection layer (61) is a Zn/Ni coating or a Zn/Fe coating.

2. Expansion dowel according to claim 1, **characterized in that** the corrosion protection layer (61) has a hardness between 350 HV and 500 HV.

3. Expansion dowel according to either of the preceding claims, **characterized in that** the Zn/Ni coating is a Zn/Ni coating deposited from an alkaline electrolyte.

4. Expansion dowel according to any of the preceding claims, **characterized in that** the expanding body (12) consists of steel.

5. Expansion dowel according to any of the preceding claims, **characterized in that** the anti-friction layer (62) is a water-based anti-friction coating.

6. Expansion dowel according to any of the preceding claims, **characterized in that** the dowel body (20) is an expansion sleeve which surrounds the bolt (10) at least in part, and **in that** the expanding body (12) is an expansion cone.

7. Expansion dowel according to any of the preceding claims, **characterized in that** it is a bolt-type expansion dowel.

8. Method for producing an expansion dowel according to any of the preceding claims, in which the corrosion protection layer (61) is electrodeposited.

## Revendications

1. Cheville à expansion, comportant
- au moins un corps de cheville (20), et
- un goujon (10), le goujon (10) ayant un corps d'expansion (12) qui pousse le corps de cheville (20) radialement vers l'extérieur lorsque le corps d'expansion (12) est déplacé par rapport au corps de cheville (20) dans une direction d'extraction (101),
- une couche de protection contre la corrosion (61) et une couche de glissement (62) recouvrant la couche de protection contre la corrosion (61) étant prévues sur le corps d'expansion (12), **caractérisée en ce que** la couche de protection contre la corrosion (61) est un revêtement Zn/Ni ou un revêtement Zn/Fe.

2. Cheville à expansion selon la revendication 1, **caractérisée en ce que** la couche de protection contre la corrosion (61) a une dureté comprise entre 350 HV et 500 HV.

3. Cheville à expansion selon l'une quelconque des revendications précédentes, **caractérisée en ce que** le revêtement Zn/Ni est un revêtement Zn/Ni déposé, constitué d'un électrolyte alcalin.

4. Cheville à expansion selon l'une quelconque des revendications précédentes, **caractérisée en ce que** le corps d'expansion (12) est en acier.

5. Cheville à expansion selon l'une quelconque des revendications précédentes, **caractérisée en ce que** la couche de glissement (62) est une laque de glissement à base d'eau.

6. Cheville à expansion selon l'une quelconque des revendications précédentes, **caractérisée en ce que** le corps de cheville (20) est un manchon à expansion qui entoure au moins partiellement le goujon (10), et **en ce que** le corps à expansion (12) est un cône à expansion.

7. Cheville à expansion selon l'une quelconque des revendications précédentes, **caractérisée en ce qu'**il s'agit d'une cheville à expansion de type goujon.

8. Procédé de réalisation d'une cheville à expansion selon l'une quelconque des revendications précédentes, dans lequel la couche de protection contre la corrosion (61) est déposée galvaniquement.
